# EUROPÄISCHE PATENTSCHRIFT

(11) **EP 3 457 625 B1**
(45) Veröffentlichungstag und Bekanntmachung des Hinweises auf die Patenterteilung: **13.04.2022**
(21) Anmeldenummer: 18000702.3
(22) Anmeldetag: 29.08.2018
(51) Int. Cl.: H04L 9/08, G01D 4/00, H04L 29/06

(54) **VERFAHREN ZUR DATENÜBERTRAGUNG**
DATA TRANSMISSION METHOD
PROCÉDÉ DE TRANSMISSION DE DONNÉES

(30) Priorität: 15.09.2017 DE 102017008688
(43) Veröffentlichungstag der Anmeldung: 20.03.2019
(73) Patentinhaber: Diehl Metering Systems GmbH, 90451 Nürnberg (DE)
(72) Erfinder: Schmitz, Stefan, DE - 90455 Nürnberg (DE); Schmidt, Achim, DE - 91367 Weißenohe (DE)
(74) Vertreter: Diehl Patentabteilung

(56) Entgegenhaltungen:
- US-A1- 2011 271 110
- US-A1- 2013 077 781
- US-B1- 7 392 382
- Oms Group: "Open Metering System Specification Volume 2 Primary Communication Issue 4.0.2 / 2014-01-27 RELEASE", , 27. Januar 2014 (2014-01-27), XP055540689, Gefunden im Internet: URL:https://oms-group.org/fileadmin/files/ download4all/specification/Vol2/4.0.2/OMS- Spec_Vol2_Primary_v402.pdf [gefunden am 2019-01-10]

## Beschreibung

Die vorliegende Erfindung betrifft ein Verfahren zur Datenübertragung, insbesondere zur Verbrauchsdatenübertragung zwischen einer Zentraleinheit und mindestens einem Verbrauchsmessgerät, gemäß dem Oberbegriff des Anspruchs 1.

### Technologischer Hintergrund

Intelligente Verbrauchsmessgeräte, auch Smart Meter genannt, sind in einem Versorgungsnetz befindliche Verbrauchsmessgeräte, z. B. für Energie, Strom, Gas, Wasser, die dem jeweiligen Anschlussbenutzer den tatsächlichen Verbrauch anzeigen und in ein Kommunikationssystem eingebunden sind. Intelligente Verbrauchsmessgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkunden-tarife an die Entwicklung der Börsenstrompreise möglich. Auch können Versorgungsnetze wesentlich besser ausgelastet werden.

Intelligente Verbrauchsmessgeräte sind üblicherweise jeweils Wohn- und Industrieeinheiten zugeordnet. Die dort anfallenden Messdaten bzw. Verbrauchsdaten können auf unterschiedlichste Weise ausgelesen werden. Messdaten können z. B. über das Stromnetz (Power Line) ausgelesen werden. Ferner können Messdaten in Form von Datenpaketen oder Telegrammen auch per Funk, beispielsweise im ISM (Industrial, Scientific, Medical)- oder SRD (Short Range Device)-Band-Frequenzbereich, übertragen werden. Diese Frequenzbereiche haben den Vorteil, dass von den Betreibern lediglich eine allgemeine Zulassung der Frequenzverwaltung notwendig ist.

Das Sammeln der Messdaten per Funk erfolgt entweder durch ortsfeste oder mobile Datensammeleinrichtungen bzw. Datensammler, an welche die von den Verbrauchsmessgeräten ermittelten Verbrauchsdaten übertragen werden. Die Datensammler konzentrieren hierbei die Daten (Datenkonzentratoren) bzw. speichern diese und senden sie anschließend an eine übergeordnete Zentraleinheit, wie z. B. eine zentrale Recheneinrichtung oder eine IT-Struktur innerhalb der Schaltzentrale des Versorgers (Head End), wo diese z. B. zur Rechnungsstellung weiterverarbeitet werden. Bei der Kommunikation mit den Verbrauchszählern zwischen Datensammeleinrichtung und Zentraleinheit handelt es sich um eine sogenannte Primärkommunikation, die z. B. auf Basis der Standards aus der EN 13757 und des OMS (Open Metering System) erfolgt.

### Druckschriftlicher Stand der Technik

Aus der US 2011/0271110 A1 ist ein Verfahren zur Datenübertragung gemäß dem Oberbegriff des Anspruchs 1 bekannt. Bei diesem Verfahren wird aus einem Hauptschlüssel ein Anwendungs-Hauptschlüssel angeleitet, aus dem wiederum ein Zweck-spezifischer Schlüssel einer Schlüsselreihe abgeleitet wird. Jeder Zweck-spezifische Schlüssel wird zur Verschlüsselung einer spezifischen Anwendung verwendet. Die Ableitung des Anwendungs-Hauptschlüssels erfolgt anhand eines Key Labels. Die Festlegung, ob ein Zweck-spezifischer Schlüssel wieder verwendet werden kann, erfolgt über einen Indexwert der Schlüsselreihe, über den festgestellt werden kann, ob und wofür ein Zweck-spezifischer Schlüssel bereits verwendet worden ist oder nicht.

Die US 7,392,382 B1 betrifft ein Verfahren zur Verifizierung der Zeitaktualität von Daten in einem Sicherheitsnetzwerk von Computern. In einer Internet Protocol Multicast Gruppe kann ein Gruppenmitglied Datenpakete über das Netzwerk an eine Vielzahl anderer Gruppenmitglieder-Hosts verschicken. Multicast-Routing-Protokolle erfordern keine vorherige Autorisierung von sich der Multicast Gruppe anschließenden Hosts. Gruppenmitglieder können jedoch vertrauliche Daten vor dem Versenden verschlüsseln, um sie nicht vertrauenswürdigen Hosts vor zu enthalten. Da die vertrauenswürdigen Hosts den Schlüssel nicht haben, können sie die verschlüsselte Sendung nicht entschlüsseln. Allerdings können nicht vertrauenswürdigen Hosts sog. Denial of Service-Angriffe auf legitime Gruppenmitglieder durchführen, indem sie legitim verschlüsselte Datenpakete erneut versenden, die dann von legitimen Gruppenmitglieder als aktuelle Datenpakete angesehen werden.

Die Norm EN 13757 Security Mode 7 sowie auch der OMS Standard Profile B definieren einen Sicherheitsschlüssel zur generischen Verwendung. Im OMS ist dies der sogenannte Hauptschlüssel (Master Key), der typischerweise in einem Schlüsselverwaltungssystem (Key Management-System) in der Zentraleinheit sicher abgelegt ist. Mittels einer Schlüsselableitung (KDF, Key Derivation Function) werden von dem Hauptschlüssel aus flüchtige Schlüssel (ephemral Keys) erzeugt bzw. abgeleitet, die dann einmalig für eine Kommunikation verwendet werden, d. h. es wird ein zweiter Schlüssel vom Hauptschlüssel abgeleitet, der zur Datenübertragung dient.

Ein Parameter der Schlüsselableitung ist ein sogenannter Nachrichtenzähler (Message Counter), der bei jeder Nachricht inkrementiert wird. Dadurch wird der Schlüssel direkt an diese Nachricht gekoppelt. Zur Schlüsselableitung werden daher immer der Hauptschlüssel sowie der Nachrichtenzähler benötigt, d. h. wenn z. B. ein mobiler Datensammler Nachrichten versenden will, muss der Hauptschlüssel aus dem sicheren Schlüsselverwaltungssystem an den verhältnismäßig unsicheren mobilen Datensammler übermittelt werden. Dadurch werden erhebliche Sicherheitslücken im Kommunikationssystem erzeugt, indem der Hauptschlüssel durch den mobilen Datensammler einfacher an Dritte gelangen kann. Wodurch auch ein Angriff Dritter auf die Zentraleinheit ermöglicht wird.

### Aufgabe der vorliegenden Erfindung

Der vorliegenden Erfindung liegt die Aufgabe zugrunde, ein Verfahren zur Datenübertragung zur Verfügung zu stellen, bei dem die Daten- sowie Übertragungssicherheit kostengünstig und in einfacher Weise verbessert wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Bei dem erfindungsgemäßen Verfahren zur Datenübertragung werden die Daten, insbesondere Verbrauchsdaten, zwischen einer Zentraleinheit und mindestens einem Verbrauchsmessgerät übertragen. Die Datenübertragung erfolgt verschlüsselt. Erfindungsgemäß leiten die Zentraleinheit und/oder das jeweilige Verbrauchsmessgerät einen dritten Schlüssel vom Hauptschlüssel anhand mindestens eines festlegbaren Parameters ab. Der dritte Schlüssel wird anschließend an die Datensammeleinrichtung übermittelt. Der zweite Schlüssel wird dabei durch die Zentraleinheit, das Verbrauchsmessgerät und/oder die Datensammeleinrichtung vom dritten Schlüssel abgeleitet, wobei die Datenübertragung anhand des zweiten Schlüssels erfolgt. Dementsprechend sendet z. B. die Datensammeleinrichtung die ihr übertragenen Daten anhand des zweiten Schlüssels an die Zentraleinheit bzw. das jeweilige Verbrauchsmessgerät, wobei die Zentraleinheit bzw. das jeweilige Verbrauchsmessgerät den zweiten Schlüssel vom dritten Schlüssels ableiten und somit die empfangenen Daten anhand des zweiten Schlüssels entschlüsseln können. Dadurch, dass vom Hauptschlüssel aus ein dritter Schlüssel erzeugt wird, der an verhältnismäßig unsichere Kommunikationsteilnehmer ausgegeben und durch den der zweite Schlüssel abgeleitet werden kann, wird es ermöglicht, dass der Hauptschlüssel in der sicheren Umgebung der Zentraleinheit bzw. des Verbrauchsmessgerätes verbleiben kann. Zudem wird eine Ende-zu-Ende-Sicherheit bei der Datenübertragung gewährleistet, ohne dass der Hauptschlüssel an die Datensammeleinrichtung übertragen werden muss. Die Daten- sowie Übertragungssicherheit wird dadurch in besonderem Maße verbessert.

Erfindungsgemäß erfolgt die Ableitung des dritten Schlüssels vom Hauptschlüssel in einer ersten Schlüsselableitung durch die Zentraleinheit und/oder das Verbrauchsmessgerät. Der dritte Schlüssel kann hierbei in praktischer Weise dadurch abgeleitet werden, dass ein Parameter zur Ableitung herangezogen wird. Die Schlüsselableitung kann hierbei in einfacher und kostengünstiger Weise als reine Softwarelösung auch in bestehenden Systemen implementiert werden.

Erfindungsgemäß erfolgt die Ableitung des zweiten Schlüssels vom dritten Schlüssel mittels einer zweiten Schlüsselableitung durch die Zentraleinheit und/oder das Verbrauchsmessgerät und/oder die Datensammeleinrichtung, sodass z. B. die Zentraleinheit, das Verbrauchsmessgerät und die Datensammeleinrichtung den zweiten Schlüssel besitzen.

Erfindungsgemäß ist als Parameter der ersten Schlüsselableitung ein Zeitwert vorgesehen, insbesondere die aktuelle Uhrzeit. Dadurch wird die Schlüsselableitung an die Uhrzeit der Schlüsselableitung und/oder der Datenübertragung gekoppelt. Die Übertragungssicherheit wird dadurch zusätzlich erhöht, da es sich hierbei um einen ständig variierenden Zeitwert handelt, der für einen etwaigen Angreifer nur sehr schwer ermittelbar ist. Ferner kann der Zeitwert auch eine festlegbare Zeitspanne bzw. ein Zeitintervall umfassen, um z. B. eine auftretende Toleranz der Zeitreferenzeinrichtungen der Verbrauchsmessgeräte mit einzubeziehen. Dadurch kann bei nahezu gleichbleibender Sicherheit eine minimale zeitliche Abweichung der Zeitreferenzeichrichtungen berücksichtigt werden, um die Wahrscheinlichkeit einer erfolgreichen Datenübertragung zu erhöhen.

Zusätzlich kann als Parameter auch ein festlegbares Ereignis, wie z. B. die Anzahl der erfolgten Schlüsselableitungen oder Datenübertragungen, vorgesehen sein, d. h. ein Ereignis- oder Transaktionswert. Das festlegbare Ereignis kann z. B. durch Inkrementierung oder Dekrementierung der Anzahl der erfolgten Ereignisse als Zahlwert bei der ersten Schlüsselableitung berücksichtigt werden. Erfindungsgemäß ist der Hauptschlüssel ausschließlich der Zentraleinheit und dem Verbrauchsmessgerät zugänglich. Daraus resultiert der Vorteil, dass der Hauptschlüssel nicht an einen verhältnismäßig unsicheren Kommunikationsteilnehmer, wie z. B. einen mobilen Datensammler, herausgegeben werden muss, um eine Datenübertragung durchführen zu können. Die Sicherheit des gesamten Kommunikationssystems wird dadurch erheblich verbessert.

Vorzugsweise handelt es sich bei dem zweiten Schlüssel um einen flüchtigen Schlüssel, welcher z. B. einmalig für einen Kommunikationsvorgang verwendet wird.

Erfindungsgemäß umfasst der zweite Schlüssel mehrere Schlüsselteile. Eine Entschlüsselung ist somit nur dadurch möglich, indem dem entschlüsselnden Kommunikationsteilnehmer alle Schlüsselteile zur Entschlüsselung bekannt sind.

Erfindungsgemäß ist als Schlüsselteil des zweiten Schlüssels ein Authentifizierungsschlüssel vorgesehen. Zudem kann als Schlüsselteil ein Kodierungsschlüssel vorgesehen sein. Der Authentifizierungsschlüssel dient hierbei dazu, um festzustellen, ob der Anfragende berechtigt ist, den Dateninhalt zu öffnen. Demgegenüber umfasst der Kodierungsschlüssel die Kodierungsinformationen. Die Übertragungssicherheit wird durch eine derartige Aufteilung in besonderem Maße verbessert.

Erfindungsgemäß handelt es sich bei dem dritten Schlüssel um einen temporären Schlüssel, welcher eine festlegbare Gültigkeitsdauer aufweist. Die festlegbare Gültigkeitsdauer des dritten Schlüssels ist erfindungsgemäß anhand eines Zeitwertes definiert. Beispielsweise kann als Zeitwert eine bestimmte Restgültigkeitsdauer, z. B. eine Stunde, ein Tag, eine Woche oder dergleichen, festgelegt werden, sodass der dritte Schlüssel nach Ablauf der Gültigkeitsdauer verfällt bzw. unbrauchbar ist. Dementsprechend wird mit dem dritten Schlüssel ein Schlüssel erzeugt, der die sichere Umgebung (Zentraleinheit) verlassen kann, z. B. durch Übermitteln an einen mobilen Datensammler, jedoch durch die begrenzte Gültigkeit die Sicherheitsrelevanz des dritten Schlüssels zeitlich begrenzt. Dadurch wird der Zeitraum eines möglichen Angriffs in besonderem Maße verringert, wodurch die Daten- und Übertragungssicherheit erheblich verbessert wird.

Vorzugsweise besitzt das Verbrauchsmessgerät eine spezifische Identifikationsnummer (ID-Nummer), welche die Datensammeleinrichtung der Zentraleinheit mit einer Anfrage zur Übersendung des dritten Schlüssels übermitteln kann. Die Zentraleinheit kann nun die Ableitung des dritten Schlüssels vom Hauptschlüssel bzw. die erste Schlüsselableitung unter Berücksichtigung der ihr übermittelten ID-Nummer durchführen, sodass die ID-Nummer des jeweiligen Verbrauchsmessgerätes als Teil der Ableitung einbezogen wird. Dadurch wird die Ableitung um einen zusätzlichen, messgerätspezifischen Wert erweitert, womit die Übertragungssicherheit noch zusätzlich verbessert wird.

Zweckmäßigerweise erfolgt eine Zeitsynchronisation zwischen der Zentraleinheit, dem Verbrauchsmessgerät und/oder der Datensammeleinrichtung, d. h. insbesondere deren Zeitreferenzeinrichtungen. Dies kann beispielsweise durch Synchronisationsvorgänge, über Funk gesendete Synchronisationssequenzen oder Zeitwerte erfolgen. Dadurch können die Zeiten der Zeitreferenzeinrichtungen von Zentraleinheit, Verbrauchsmessgerät und/oder Datensammeleinrichtung synchronisiert bzw. vereinheitlicht werden, um zu gewährleisten, dass z. B. eine Schlüsselableitung unter Einbeziehung der aktuellen Uhrzeit sender- und empfängerseitig in gleicher Weise erfolgt.

Besonders geeignet ist die Anwendung des vorliegenden Verfahrens, wenn es sich bei der Datenübertragung um eine Funkübertragung handelt. Beispielsweise kann die Datenübertragung derart erfolgen, dass die Daten in Form von Datenpaketen auf ein oder mehreren Funkkanälen bzw. Frequenzen erfolgt. Vorzugsweise werden die Daten hierbei auf den ISM- und/oder SRD-Frequenzbändern übertragen.

Zweckmäßigerweise kann es sich bei der Datenübertragung um eine bidirektionale Datenübertragung handeln, sodass z. B. Verbrauchsdaten des Verbrauchsmessgerätes über den Datensammler an die Zentraleinheit und Betriebs- oder Steuerdaten (z. B. Firmwareupdates) der Zentraleinheit über den Datensammler an das Verbrauchsmessgerät übermittelt werden.

Vorzugsweise ist eine Mehrzahl von Verbrauchsmessgeräten und/oder Datensammeleinrichtungen vorgesehen, wobei es sich bei den Verbrauchsmessgeräten insbesondere um Wasser-, Wärmemengen-, Gas- oder Stromzähler handelt, welche den aktuellen Verbrauch an Wasser, Wärmemenge, Gas oder Strom ermitteln und an die Datensammeleinrichtung übermitteln.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte, schematische Darstellung einer ersten Ausgestaltung eines Kommunikationssystems, welches das erfindungsgemäße Verfahren zur Datenübertragung nutzt;
- Fig. 2a-c: eine vereinfachte, schematische Darstellung einer Ausgestaltung eines Kommunikationssystems, welches zur Datenübertragung ein Verfahren gemäß dem Stand der Technik nutzt;
- Fig. 3a-d: eine vereinfachte, schematische Darstellung einer weiteren Ausgestaltung eines Kommunikationssystems, welches das erfindungsgemäße Verfahren zur Datenübertragung nutzt;
- Fig. 4: eine vereinfachte, schematische Darstellung einer Abfolge einer Sendesequenz der Schlüsselverwaltung;
- Fig. 5: eine vereinfachte, schematische Darstellung der Schlüsselhierarchie;
- Fig. 6a: eine vereinfachte, schematische Darstellung einer zeitabhängigen Schlüsselableitung, sowie
- Fig. 6b: eine vereinfachte, schematische Darstellung einer ereignisabhängigen Schlüsselableitung.

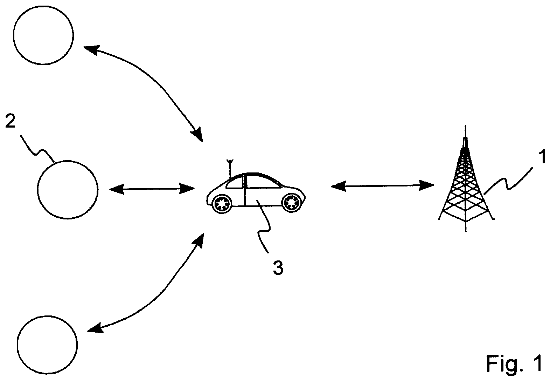

Fig. 1 zeigt eine erste Ausgestaltung eine Kommunikationssystems, welches das erfindungsgemäße Verfahren zur Datenübertragung nutzt, bei dem Daten, insbesondere Verbrauchsdaten, Betriebsdaten, Steuerdaten oder dergleichen, zwischen mehreren Kommunikationsteilnehmern, insbesondere einer Zentraleinheit 1 und mehreren Verbrauchsmessgeräten 2, übertragen werden. Vorzugsweise handelt es sich bei der Zentraleinheit 1 um die Schaltzentrale des Versorgers sowie die dazugehörige IT-Struktur (Head-End). Die Verbrauchsmessgeräte 2 sind jeweils als Smart-Meter ausgestaltet, die jeweils zur Verbrauchsbestimmung des Verbrauchs an einem Versorgungsmedium dienen, wie z. B. des Wasser-, Wärmemengen-, Gas- oder Stromverbrauchs.

Zwischen der Zentraleinheit 1 und den Verbrauchsmessgeräten 2 ist eine Datensammeleinrichtung 3 angeordnet, welche z. B. die Daten bzw. Verbrauchsdaten der Verbrauchsmessgeräte 2 empfängt bzw. sammelt, speichert und an die Zentraleinheit 1 weiterleitet. Die Datensammeleinrichtung 3 in Fig. 1 ist als mobiler Datensammler bzw. Datenkonzentrator ausgestaltet, mittels dem z. B. eine Driveby-Ablesung seitens des Versorgers durchgeführt werden kann. Die Datenübertragung zwischen den jeweiligen Kommunikationsteilnehmern erfolgt verschlüsselt, sodass eine Ende-zu-Ende-Sicherheit bei der Datenübertragung gewährleistet wird.

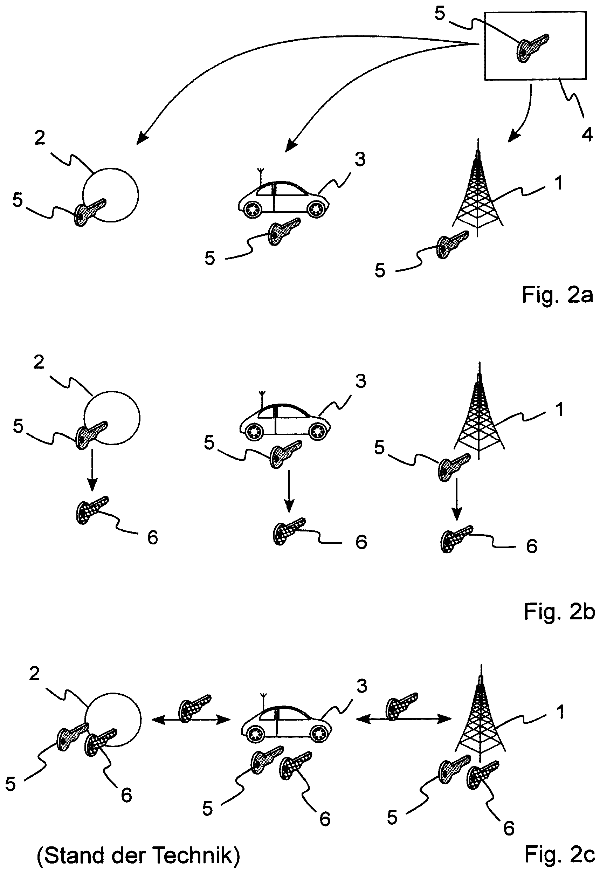

Die Fig. 2a-2c zeigen ein Kommunikationssystem, welches zur Datenübertragung ein Verfahren gemäß dem Stand der Technik nutzt. Der Übersichtlichkeit halber ist in den Fig. 2a-2c jeweils nur ein Verbrauchsmessgerät 2 dargestellt. Die Daten sollen verschlüsselt übertragen werden, wobei ein Hauptschlüssel 5 vorgesehen ist, welcher in einem Schlüsselverwaltungssystem 4 abgelegt ist. Das Schlüsselverwaltungssystem 4 kann beispielsweise innerhalb der Zentraleinheit 1 angeordnet sein. Der Hauptschlüssel 5 wird zunächst, gemäß Fig. 2a, durch das Schlüsselverwaltungssystem 4 an die Zentraleinheit 1, das Verbrauchsmessgerät 2 sowie die Datensammeleinrichtung 3 übermittelt, d. h. an alle Kommunikationsteilnehmer, die zur Datenübertragung dienen.

Danach wird, gemäß Fig. 2b, ein zweiter Schlüssel 6 durch den jeweiligen Kommunikationsteilnehmer anhand des Hauptschlüssels 5 erzeugt bzw. abgeleitet, d. h. es erfolgt eine Schlüsselableitung des zweiten Schlüssels 6 vom Hauptschlüssel 5, der dann einmalig für eine Kommunikation zwischen den jeweiligen Kommunikationsteilnehmern verwendet wird.

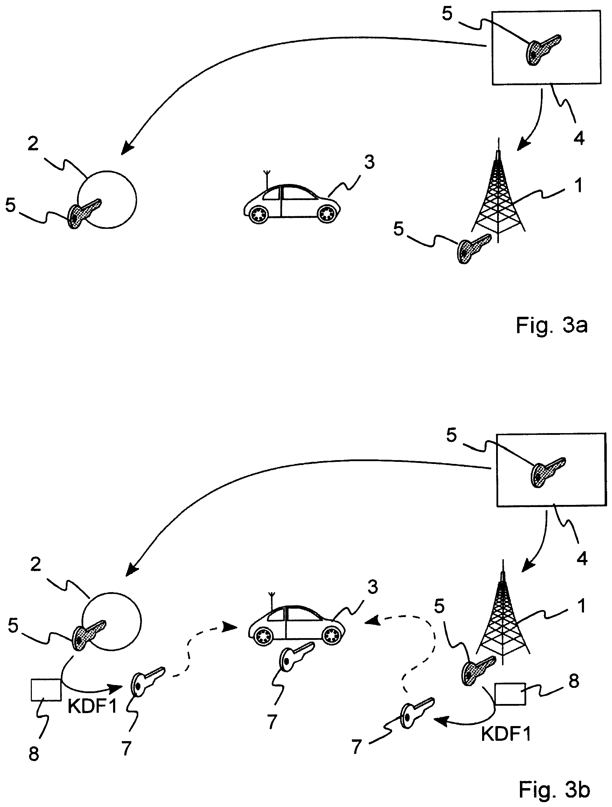

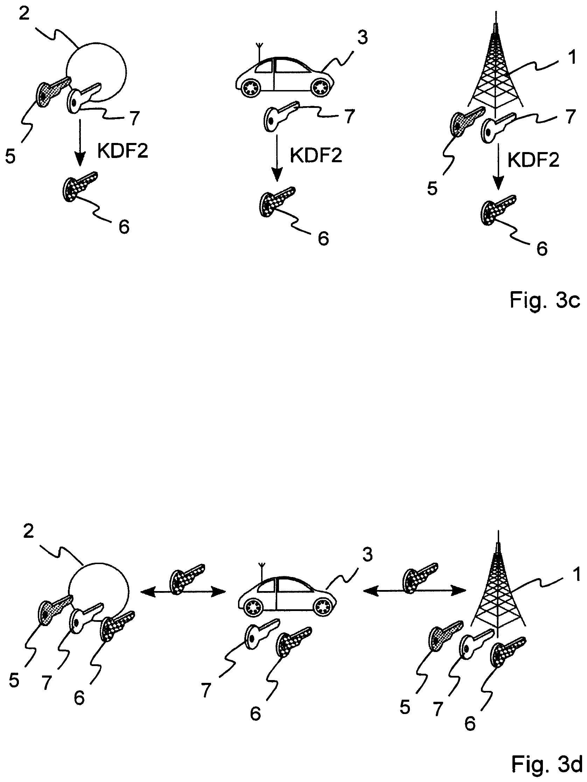

Im Gegensatz dazu wird, gemäß Fig. 3a, bei dem erfindungsgemäßen Verfahren der Hauptschlüssel 5 vom Schlüsselverwaltungssystem 4 insbesondere ausschließlich an die Zentraleinheit 1 und das Verbrauchsmessgerät 2 übermittelt. Die Zentraleinheit 1 und/oder das jeweilige Verbrauchsmessgerät 2 können anschließend anhand mindestens eines festlegbaren Parameters 8 einen dritten Schlüssel 7 vom Hauptschlüssel 5 in einer ersten Schlüsselableitung KDF1ableiten, der wiederum an die Datensammeleinrichtung 3 übermittelt wird (Fig. 3b), sodass z. B. alle Kommunikationsteilnehmer den dritten Schlüssel 7 besitzen. Dementsprechend kann der zweite Schlüssel 6 durch die Zentraleinheit 1, das Verbrauchsmessgerät 2 und/oder die Datensammeleinrichtung 3 jeweils vom dritten Schlüssel 7 durch eine zweite Schlüsselableitung KDF2 abgeleitet werden (Fig. 3c), sodass die jeweiligen Kommunikationsteilnehmer den zweiten Schlüssel 6 besitzen und die Datenübertragung anhand des zweiten Schlüssels 6 erfolgen kann (Fig. 3d).

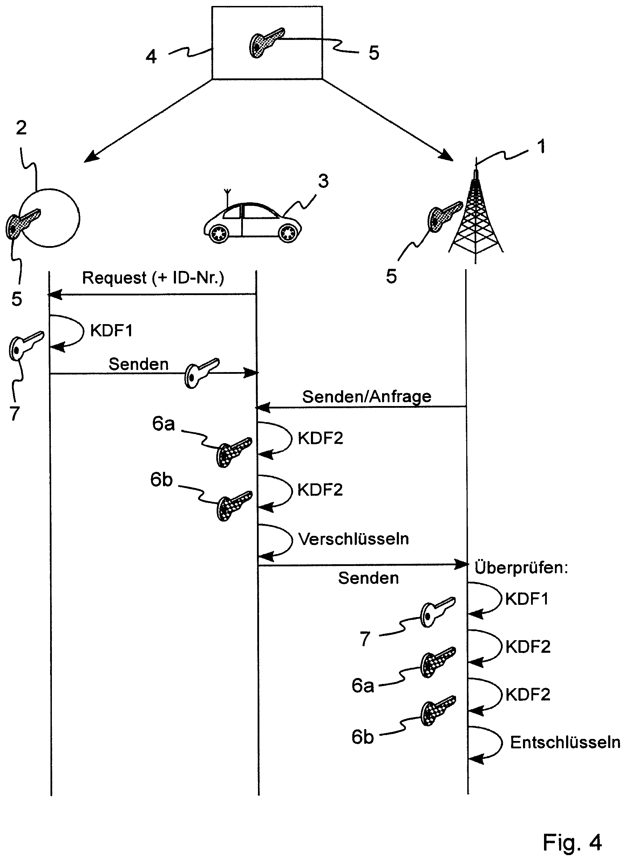

Fig. 4 zeigt eine Abfolge einer Sendesequenz der Schlüsselverwaltung. Der Hauptschlüssel 5 wird vom Schlüsselverwaltungssystem 4 an das Head End der Zentraleinheit 1 und dem Verbrauchsmessgerät 2 übermittelt. In Fig. 4 erfolgt zur Datenübertragung von zunächst eine Anfrage (Request) der mobilen Datensammeleinrichtung 3 an die Zentraleinheit 1, z. B. unter Einbeziehung der ID-Nummer des jeweiligen Verbrauchsmessgerätes 2. Daraufhin generiert die Zentraleinheit 1 mittels erster Schlüsselableitung KDF1 unter Einbeziehung des Parameters 8 (z. B. ein Zeit- oder Ereigniswert) den temporären dritten Schlüssel 7 und übermittelt diesen an die Datensammeleinrichtung 3. Der dritte Schlüssel 7 wird nun von der Datensammeleinrichtung 3 z. B. nach einer Anfrage des Verbrauchsmessgerätes 2 als Eingabe für die zweite Schlüsselableitung KDF2 genutzt, um den zweiten Schlüssel 6 bzw. den Authentifizierungsschlüssel 6a und den Kodierungsschlüssel 6b zu erzeugen. Im Anschluss daran können die Daten von der Datensammeleinrichtung 3 mittels Authentifizierungsschlüssel 6a und Kodierungsschlüssel 6b verschlüsselt und an das Verbrauchsmessgerät 2 gesendet werden. In praktischer Weise kann dem Verbrauchsmessgerät 2 der Parameter 8 beim Senden der Daten von der Datensammeleinrichtung 3 zum Verbrauchsmessgerät 2 mitgeteilt werden.

Das Verbrauchsmessgerät 2, welches die verschlüsselten und authentifizierten Daten von der Datensammeleinrichtung 3 erhält, kann in gleicher Weise die Daten entschlüsseln, indem es ausgehend vom Hauptschlüssel 5 die erste Schlüsselableitung KDF1 und die zweite Schlüsselableitung KDF2 durchführt und somit den dritten Schlüssel 7 sowie den zweiten Schlüssel 6 bzw. den Authentifizierungsschlüssel 6a und den Kodierungsschlüssel 6b erzeugt. Ferner kann eine Überprüfung des übermittelten Parameters 8 vorgesehen sein, wodurch z. B. eine Plausibilitätsprüfung des Parameters 8 erfolgen kann bevor das Verbrauchsmessgerät 2 die Daten verarbeitet.

Ein wichtiger Aspekt ist hierbei die Art der ersten Schlüsselableitung KDF1 und der dazu benötigte Parameter 8, welcher der Zentraleinheit 1 sowie dem verbrauchsmessgerät 2 zugänglich sein muss. Gemäß einer bevorzugten Ausgestaltung der Erfindung handelt es sich bei dem Algorithmus der Schlüsselableitung um einen Algorithmus wie aus der EN 13757.

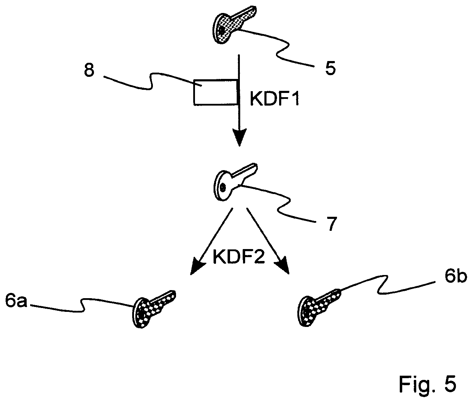

Für die Durchführung einer ersten Schlüsselableitung KDF1 werden beispielsweise folgende Eingaben benötigt: der Hauptschlüssel 5, welcher der Zentraleinheit 1 und dem Verbrauchsmessgerät 2 zugänglich ist, die ID-Nummer der Datensammeleinrichtung 3 und/oder des Verbrauchsmessgerätes 2, durch die der Schlüssel an diese Datensammeleinrichtung 3 bzw. das jeweilige Verbrauchsmessgerät 2 gebunden wird, der Parameter 8, der z. B. verwendet wird, um die Gültigkeitsbeschränkung zu implementieren, und vorzugsweise eine Paddingprozedur, um z. B. die Daten mit Fülldaten auf eine bestimmte Datenlänge zu erweitern, z. B. auf 128 bits. Der Parameter 8 wird entweder zusammen mit der Datensendung bzw. der Nachricht übertragen oder er wird durch eine Absprache zwischen den Kommunikationsteilnehmern abgeleitet. Der Parameter 8 kann beispielsweise einen Zeitwert umfassen, sodass der dritte Schlüssel 7 eine zeitliche Haltbarkeit aufweist, oder auf einen Ereigniszähler basieren, sodass die Haltbarkeit des dritten Schlüssels 7 an das Auftreten eines festlegbaren Ereignisses gebunden ist. Ferner können auch mehrere Parameter 8 vorgesehen sein. Das Ergebnis der ersten Schlüsselableitung KDF1 ist somit ein temporärer Kommunikationsschlüssel, welcher ein vorübergehend abgeleitetes Geheimnis zwischen den Kommunikationsteilnehmern darstellt. Die zweite Schlüsselableitung KDF2 wird anschließend analog zu EN 13757 oder OMS Standardprofil B durchgeführt, mit dem Unterschied, dass der dritte Schlüssel 7 anstelle des Hauptschlüssels zur Ableitung verwendet wird. Die Schlüsselhierarchie sowie die deren Ableitungen sind zur näheren Erläuterung nochmals in Fig. 5 dargestellt.

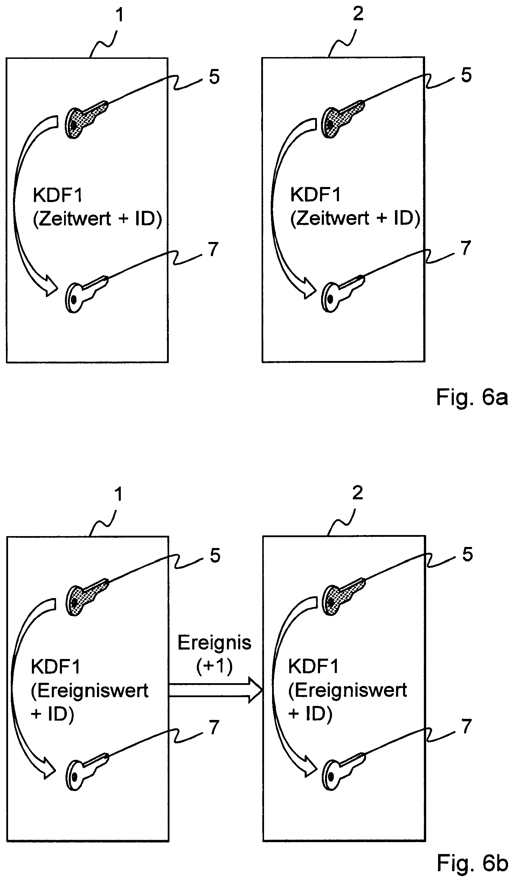

Gemäß Fig. 6a kann es sich bei der ersten Schlüsselableitung KDF1 um eine zeitabhängige Schlüsselableitung handeln. Der Parameter 8 basiert hierbei auf einem Zeitwert. Beispielsweise kann als Zeitwert auch eine Kombination aus Tag und Jahr (Kalendertag) oder Woche und Jahr (Kalenderwoche) verwendet werden. Der abgeleitete temporäre dritte Schlüssel 7 ist dabei gültig für einen bestimmten Tag oder eine bestimmte Woche, d. h. für ein bestimmtes Zeitintervall. Wichtig ist hierbei, dass die Zeitwerte von Zentraleinheit 1 und Verbrauchsmessgerät 2 identisch sind oder nicht zu weit abweichen. Hierzu können die Zeitreferenzeinrichtungen der Kommunikationsteilnehmer z. B. täglich oder wöchentlich synchronisiert werden. Ferner können die abzuleitenden Schlüssel in der Zentraleinheit 1 vorkalkuliert werden. Demgegenüber werden vom Verbrauchsmessgerät 2 Daten bzw. Nachrichten zurückgewiesen, die nicht mit einem Schlüssel mit dem entsprechenden Zeitwert verschlüsselt worden sind. Zweckmäßigerweise ist der dritte Schlüssel 7 für alle Nachrichten gültig, die in dem Zeitintervall gesendet wurden, und nicht nur für eine bestimmte Nachricht.

Als zusätzliche Schutzmaßnahme kann das Verbrauchsmessgerät 2 derart abgesichert werden, dass der Hauptschlüssel 5 diesem nicht entnehmbar ist. Zudem muss sichergestellt sein, dass die Zeitreferenzeinrichtung des Verbrauchsmessgerätes 2 manipulationssicher ist. Ferner kann die Zugriffsmöglichkeit der Datensammeleinrichtung 3 auf das Verbrauchsmessgerät 2 beschränkt werden, z. B. dadurch, dass die Uhrzeit des Verbrauchsmessgerätes 2 nicht durch die Datensammeleinrichtung 3 verändert werden kann.

Datenübertragungen an den Grenzen der Zeitintervalle (Tag, Woche) können gegebenenfalls aufgrund von Divergenzen der Zeitreferenzeinrichtungen nicht durchgeführt werden. Dieses Problem kann beispielsweise dadurch umgangen werden, dass ein oder mehrere Annahmeschlüssel außerhalb des Zeitintervalls versendet werden, z. B. zwei Stunden davor oder danach. Hierdurch kann zusätzlich eine Art Synchronisation erreicht werden, ohne dass der Zeitwert (Zeit, Datum) zwingend mit übermittelt wird.

Gemäß Fig. 6b kann es sich bei der ersten Schlüsselableitung KDF1 auch um eine ereignisabhängige Schlüsselableitung handeln. Der Parameter 8 ist hierbei ein Ereigniswert, der auf einem sogenannten Transaktionszähler oder Ereigniszähler basiert. Beispielsweise kann sich der Ereigniswert mit jedem Auftreten des Ereignisses verändern, z. B. ansteigen (+1) mit jeder durchgeführten Schlüsselableitung KDF1, wobei jeder Ereigniswert logischerweise nur einmal akzeptiert wird. Um hierbei Fehler auszuschließen, die aufgrund von Synchronisationslücken entstehen, können auch bestimmte Toleranzen eingefügt werden, z. B. dass eine Schlüsselableitung basierend auf einen Ereigniswert von +1 bis +20 akzeptiert wird. Die Gültigkeit des abgeleiteten temporären dritten Schlüssels 7 kann dabei ein bestimmtes Zeitintervall umfassen, z. B. die nächste Stunde, den nächsten Tag oder dergleichen, sodass die Haltbarkeit bzw. Gültigkeit des dritten Schlüssels 7 an eine Kombination aus zeitlicher und ereignisorientierter Beschränkung gebunden ist. Der Ereigniswert ist hierbei Teil des Datenpakets bzw. der Nachricht, wobei der Empfänger die Nachrichten ablehnt, die nicht mit einem entsprechenden Ereigniswert versehen sind.

Ferner können Synchronisationsmechanismen vorgesehen sein, die z. B. die Ereigniszähler von Zentraleinheit 1 und Verbrauchsmessgerät 2 synchronisieren. Darüber hinaus können auch Initialisierungsphasen zur Synchronisation vor der Datenübertragung durchgeführt werden.

Zusammenfassend kann somit das Schlüsselmanagement, wie z. B. das Schlüsselmanagement des OMS Standards, in einfacher und kostengünstiger Weise erweitert werden, um einen Schlüssel zu erzeugen, der eine beschränkte Gültigkeit aufweist, d. h. den temporären bzw. dritten Schlüssel. Diese Gültigkeit kann z. B. auf Zeit oder dem Auftreten von Ereignissen basieren. Ferner können derartige Schlüssel mit weitaus weniger Risiko z. B. an mobile Geräte, wie mobile Datensammler, vergeben werden. Sollten diese Geräte dann von Dritten korrumpiert werden, wird deren Zugriff auf die jeweiligen Verbrauchsmessgeräte 2 beschränkt. Dementsprechend wird durch die Erfindung ein bestehendes Gefährdungspotential bei der Ausbringung von Schlüsseln für symmetrische Verschlüsselungen behoben, d. h. des Ausbringens des Hauptschlüssels 5 an verhältnismäßig unsichere Kommunikationsteilnehmer. Durch die Flüchtigkeit der abgeleiteten Schlüssel wird die Kommunikation bzw. die Datenübertragung eines wesentlichen Teils des Kommunikationssystems besser geschützt. Darüber hinaus wird der Zeitraum für einen möglichen Angriff beschränkt. Zudem werden für die Schlüsselverwaltung keine komplexeren Mechanismen für Revokation benötigt.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Zentraleinheit
- 2: Verbrauchsmessgerät
- 3: Datensammeleinrichtung
- 4: Schlüsselverwaltungssystem
- 5: Hauptschlüssel
- 6: zweiter Schlüssel
- 6a: Authentifizierungsschlüssel
- 6b: Kodierungsschlüssel
- 7: dritter Schlüssel
- 8: Parameter

- KDF1: erste Schlüsselableitung
- KDF2: zweite Schlüsselableitung

## Patentansprüche

1. Verfahren zur Verbrauchsdatenübertragung zwischen einer Zentraleinheit (1) und mindestens einem Verbrauchsmessgerät (2), bei dem
eine Datensammeleinrichtung (3) zwischen der Zentraleinheit (1) und dem Verbrauchsmessgerät (2) vorgesehen ist, welche die Daten des Verbrauchsmessgeräts (2) empfängt und an die Zentraleinheit (1) überträgt, und
die Daten verschlüsselt übertragen werden, wobei
ein Hauptschlüssel (5) vorgesehen ist, und
zur Datenübertragung ein zweiter Schlüssel (6) herangezogen wird,
wobei die Zentraleinheit (1) und/oder das jeweilige Verbrauchsmessgerät (2) anhand mindestens eines festlegbaren Parameters (8) einen dritten Schlüssel (7) vom Hauptschlüssel (5) im Rahmen einer ersten Schlüsselableitung (KDF1) ableitet bzw. ableiten,
wobei der dritte Schlüssel (7) an die Datensammeleinrichtung (3) übermittelt wird,
wobei der zweite Schlüssel (6) durch die Zentraleinheit (1), das Verbrauchsmessgerät (2) und/oder die Datensammeleinrichtung (3) vom dritten Schlüssel (7) im Rahmen einer zweiten Schlüsselableitung (KDF2) abgeleitet wird, und
wobei die Datenübertragung anhand des zweiten Schlüssels (6) erfolgt, **dadurch gekennzeichnet, dass**
als Parameter (8) zur Ableitung des dritten Schlüssels (7) vom Hauptschlüssel (5) ein erster Zeitwert vorgesehen ist
es sich bei dem dritten Schlüssel (7) um einen temporären Schlüssel handelt, welcher eine festlegbare Gültigkeitsdauer aufweist, die anhand eines zweiten Zeitwerts definiert ist,
der zweite Schlüssel (6) mehrere Schlüsselteile umfasst, wobei als Schlüsselteil ein Authentifizierungsschlüssel (6a) vorgesehen ist, und
der Hauptschlüssel (5) ausschließlich der Zentraleinheit (1) und dem Verbrauchsmessgerät (2) zugänglich ist.

2. Verfahren nach Anspruch 2, **dadurch gekennzeichnet, dass** als Parameter (8) die aktuelle Uhrzeit vorgesehen ist.

3. Verfahren nach mindestens einem der vorhergehenden Ansprüche, **dadurch gekennzeichnet, dass** es sich bei dem zweiten Schlüssel (6) um einen flüchtigen Schlüssel handelt.

4. Verfahren nach Anspruch 1, **dadurch gekennzeichnet, dass** als Schlüsselteil ein Kodierungsschlüssel (6b) vorgesehen ist.

5. Verfahren nach mindestens einem der vorhergehenden Ansprüche, **dadurch gekennzeichnet, dass** das Verbrauchsmessgerät (2) eine spezifische Identifikationsnummer aufweist, welche die Datensammeleinrichtung (3) der Zentraleinheit (1) übermittelt, um den dritten Schlüssel (7) zur Datenübertragung mit dem jeweiligen Verbrauchsmessgerät (2) anzufordern, wobei die Ableitung des dritten Schlüssels (7) vom Hauptschlüssel (5) durch die Zentraleinheit (1) unter Berücksichtigung der ihr übermittelten Identifikationsnummer erfolgt.

6. Verfahren nach mindestens einem der vorhergehenden Ansprüche, **dadurch gekennzeichnet, dass** eine Zeitsynchronisation zwischen der Zentraleinheit (1), dem Verbrauchsmessgerät (2) und/oder der Datensammeleinrichtung (3) erfolgt.

7. Verfahren nach mindestens einem der vorhergehenden Ansprüche, **dadurch gekennzeichnet, dass** es sich bei der Datenübertragung um eine Funkübertragung handelt.

8. Verfahren nach mindestens einem der vorhergehenden Ansprüche, **dadurch gekennzeichnet, dass** es sich bei der Datenübertragung um eine bidirektionale Datenübertragung handelt.

9. Verfahren nach mindestens einem der vorhergehenden Ansprüche, **dadurch gekennzeichnet, dass** eine Mehrzahl von Verbrauchsmessgeräten (2), insbesondere Wasser-, Wärmemengen-, Gas- oder Stromzähler, und/oder Datensammeleinrichtungen (3) vorgesehen ist.

## Claims

1. Method for transferring consumption data between a central processing unit (1) and at least one consumption meter (2), in which
there is provision for a data collecting device (3) between the central processing unit (1) and the consumption meter (2), which receives the data of the consumption meter (2) and transfers them to the central processing unit (1), and
the data are transferred in encrypted form, wherein there is provision for a main key (5), and
a second key (6) is used for the data transfer,
wherein the central processing unit (1) and/or the respective consumption meter (2) uses, or use, at least one stipulable parameter (8) to derive a third key (7) from the main key (5) as part of a first key derivation (KDF1),
wherein the third key (7) is transmitted to the data collecting device (3),
wherein the second key (6) is derived from the third key (7) by the central processing unit (1), the consumption meter (2) and/or the data collecting device (3) as part of a second key derivation (KDF2), and wherein the data transfer is effected on the basis of the second key (6), **characterized in that** the parameter (8) provided for deriving the third key (7) from the main key (5) is a first time value,
the third key (7) is a temporary key that has a stipulable validity period defined on the basis of a second time value,
the second key (6) comprises multiple key parts, the key part provided being an authentication key (6a), and the main key (5) is accessible exclusively to the central processing unit (1) and the consumption meter (2) .

2. Method according to Claim 2, **characterized in that** the parameter (8) provided is the current time of day.

3. Method according to at least one of the preceding claims,
**characterized in that** the second key (6) is a volatile key.

4. Method according to Claim 1, **characterized in that** the key part provided is a coding key (6b).

5. Method according to at least one of the preceding claims, **characterized in that** the consumption meter (2) has a specific identification number that the data collecting device (3) transmits to the central processing unit (1) in order to request the third key (7) for data transfer with the respective consumption meter (2), the third key (7) being derived from the main key (5) by the central processing unit (1) in light of the identification number transmitted to it.

6. Method according to at least one of the preceding claims, **characterized in that** a time synchronization is effected between the central processing unit (1), the consumption meter (2) and/or the data collecting device (3) .

7. Method according to at least one of the preceding claims, **characterized in that** the data transfer is a radio transmission.

8. Method according to at least one of the preceding claims, **characterized in that** the data transfer is a bidirectional data transfer.

9. Method according to at least one of the preceding claims, **characterized in that** there is provision for a plurality of consumption meters (2), in particular water meters, heat meters, gas meters or electricity meters, and/or data collecting devices (3).

## Revendications

1. Procédé de transmission de données de consommation entre une unité centrale (1) et au moins un compteur (2), dans lequel
entre l'unité centrale (1) et le compteur (2), un dispositif de collecte de données (3) est prévu qui reçoit les données du compteur (2) et les transmet à l'unité centrale (1), et
les données sont transmises de manière cryptée, dans lequel
une clé principale (5) est prévue, et
une deuxième clé (6) est utilisée pour la transmission de données,
l'unité centrale (1) et/ou le compteur (2) respectif déduisant à l'aide d'au moins un paramètre définissable (8) une troisième clé (7) à partir de la clé principale (5) dans le cadre d'une première déduction de clé (KDF1),
la troisième clé (7) étant transmise au dispositif de collecte de données (3),
la deuxième clé (6) étant déduite par l'unité centrale (1), le compteur (2) et/ou le dispositif de collecte de données (3) à partir de la troisième clé (7) dans le cadre d'une deuxième déduction de clé (KDF2), et
la transmission de données ayant lieu à l'aide de la deuxième clé (6),
**caractérisé en ce que**
une première valeur de temps est prévue comme paramètre (8) permettant de déduire la troisième clé (7) à partir de la clé principale (5),
la troisième clé (7) est une clé temporaire qui présente une durée de validité définissable qui est définie à l'aide d'une deuxième valeur de temps,
la deuxième clé (6) comprend plusieurs parties de clé, une clé d'authentification (6a) étant prévue comme une partie de clé, et
la clé principale (5) est accessible exclusivement à l'unité centrale (1) et au compteur (2).

2. Procédé selon la revendication 2, **caractérisé en ce que** l'heure actuelle est prévue comme paramètre (8).

3. Procédé selon au moins l'une des revendications précédentes, **caractérisé en ce que** la deuxième clé (6) est une clé volatile.

4. Procédé selon la revendication 1, **caractérisé en ce qu'**une clé de codage (6b) est prévue comme une partie de clé.

5. Procédé selon au moins l'une des revendications précédentes, **caractérisé en ce que** le compteur (2) présente un numéro d'identification spécifique que le dispositif de collecte de données (3) communique à l'unité centrale (1) afin de demander la troisième clé (7) pour la transmission de données avec le compteur (2) respectif, la déduction de la troisième clé (7) à partir de la clé principale (5) étant effectuée par l'unité centrale (1) en tenant compte du numéro d'identification qui lui a été transmis.

6. Procédé selon au moins l'une des revendications précédentes, **caractérisé en ce qu'**une synchronisation temporelle est effectuée entre l'unité centrale (1), le compteur (2) et/ou le dispositif de collecte de données (3) .

7. Procédé selon au moins l'une des revendications précédentes, **caractérisé en ce que** la transmission de données est une transmission radio.

8. Procédé selon au moins l'une des revendications précédentes, **caractérisé en ce que** la transmission de données est une transmission de données bidirectionnelle.

9. Procédé selon au moins l'une des revendications précédentes, **caractérisé en ce qu'**une pluralité de compteurs (2), en particulier de compteurs d'eau, de chaleur, de gaz ou d'électricité et/ou de dispositifs de collecte de données (3) est prévue.
